# EUROPEAN PATENT APPLICATION

(11) **EP 4 676 102 A1**
(43) Date of publication of application: **07.01.2026**
(21) Application number: 24766193.7
(22) Date of filing: 15.01.2024
(51) Int. Cl.: H04W 4/44, H04W 4/48, H04L 67/12

(54) **VEHICLE-TO-EVERYTHING COMMUNICATION METHOD AND APPARATUS, AND STORAGE MEDIUM**

(30) Priority: 03.03.2023 CN 202310248793
(71) Applicant: ZTE Corporation, Shenzhen, Guangdong 518057 (CN)
(72) Inventor: HUANG, Cheng, Shenzhen, Guangdong 518057 (CN); CHEN, Xiao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/072247
(87) International publication number: WO 2024/183470

(57) **Abstract**

Provided are a vehicle-to-everything communication method and apparatus, and a storage medium. The vehicle-to-everything communication method comprises: a first roadside unit receiving forwarding information of a target on-board unit that is sent by a second roadside unit, wherein the target on-board unit is an on-board unit communicating with the second roadside unit, and the forwarding information of the target on-board unit comprises an identifier of the target on-board unit; and storing the forwarding information of the target on-board unit in a forwarding table.

## Description

The present disclosure claims a priority to Chinese Patent Application No. 202310248793.8, filed on March 3, 2023, which is hereby incorporated by reference in its entirety.

### TECHNICAL FIELD

The present disclosure relates to the technical field of vehicle-to-everything, and in particular, to a vehicle-to-everything communication method and apparatus, and a storage medium.

### BACKGROUND

With the continuous development of information technology, vehicle-to-everything (V2X), as a new generation of information and communication technology that crosses fields of communication, vehicle, and transportation, etc., has become a highly promising research hotspot. As the main candidate technology for global vehicle-to-everything, cellular vehicle-to-everything (C-V2X) technology is also receiving increasing attention. At present, many demonstrations of vehicle-to-everything applications based on C-V2X technology have been carried out in various areas.

### SUMMARY

In one aspect, a vehicle-to-everything communication method is provided in the embodiments of the present disclosure, which is applied to a first road side unit. The vehicle-to-everything communication method includes:
receiving forwarding information of a target on board unit sent from a second road side unit, where the target on board unit is an on board unit that communicates with the second road side unit, and the forwarding information of the target on board unit includes an identification of the target on board unit; and
storing the forwarding information of the target on board unit in a forwarding table.

In another aspect, a vehicle-to-everything communication method is provided in the embodiments of the present disclosure, which is applied to a second road side unit. The vehicle-to-everything communication method includes:
acquiring forwarding information of a target on board unit, where the target on board unit is an on board unit that communicates with the second road side unit, and the forwarding information includes an identification of the target on board unit; and
sending the forwarding information to a first road side unit.

In yet another aspect, a communication apparatus is provided in the embodiments of the present disclosure. The communication apparatus includes: a memory and a processor; where the memory is coupled to the processor; the memory is configured to store instructions executable for the processor; the processor, upon executing the instructions, enables the communication apparatus to implement the method according to any one of the above-mentioned aspects.

In yet another aspect, a computer-readable storage medium is provided in the embodiments of the present disclosure. The computer-readable storage medium stores computer program instructions, where the computer program instructions, upon being executed by a computer, enable the computer to implement the method according to any one of the above-mentioned aspects.

In yet another aspect, a computer program product is provided in the embodiments of the present disclosure. The computer program product includes computer program instructions, where the computer program instructions, upon being executed by a computer, enable the computer to implement the method according to any one of the above-mentioned aspects.

### BRIEF DESCRIPTION OF THE DRAWINGS

In order to illustrate technical solutions in the present disclosure more clearly, the accompanying drawings needs to be used in the embodiments of the present disclosure will be introduced briefly. Obviously, the described accompanying drawings below are merely accompanying drawings of some embodiments of the present disclosure, and for a person of ordinary skill in the art can obtain other accompanying drawings according to these accompanying drawings.
FIG. 1 is a schematic diagram of an architecture of a communication system according to some embodiments.
FIG. 2 is a flowchart of a vehicle-to-everything communication method according to some embodiments.
FIG. 3 is a flowchart of another vehicle-to-everything communication method according to some embodiments.
FIG. 4 is a flowchart of yet another vehicle-to-everything communication method according to some embodiments.
FIG. 5 is a flowchart of yet another vehicle-to-everything communication method according to some embodiments.
FIG. 6 is a schematic diagram of a scenario of a vehicle-to-everything communication method according to some embodiments.
FIG. 7 is a schematic diagram of another scenario of a vehicle-to-everything communication method according to some embodiments.
FIG. 8 is a schematic diagram of yet another scenario of a vehicle-to-everything communication method according to some embodiments.
FIG. 9 is a schematic diagram of yet another scenario of a vehicle-to-everything communication method according to some embodiments.
FIG. 10 is a schematic diagram of yet another scenario of a vehicle-to-everything communication method according to some embodiments.
FIG. 11 is a schematic diagram of yet another scenario of a vehicle-to-everything communication method according to some embodiments.
FIG. 12 is a schematic diagram of yet another scenario of a vehicle-to-everything communication method according to some embodiments.
FIG. 13 is a structural schematic diagram of a communication apparatus according to some embodiments.
FIG. 14 is a structural schematic diagram of another communication apparatus according to some embodiments.

### DETAILED DESCRIPTION

The technical solutions in the present disclosure will be described below clearly and completely in conjunction with the accompanying drawings in the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplarily" or "for example" and variations thereof are used to indicate examples, instances, or illustrations. Any embodiment or design solution described in the present disclosure with wordings such as "exemplarily" or "for example" should not be illustrated as more preferred or advantageous embodiment or design solution over other embodiments or design solutions. Specifically, the usage of the wordings such as "exemplarily" or "for example" is intended to present relevant concepts in a concrete way.

Hereinafter, terms "first" and "second," etc., are used for descriptive purposes only, and are not to be understood as indicating or implying the relative importance or implicitly indicating a number of indicated technical features. Thus, features limited with wordings like "first" or "second," etc., may explicitly or implicitly include one or more of the feature(s).

In the description of the present disclosure, unless otherwise specified, "/" means an "or" relationship, for example, "A/B" may represent A or B. The term "and/or" in the description is merely a relevant relationship for describing related objects, which represents that there may be three relationships. For example, A and/or B may represent: only A; only B; or both A and B. In addition, a wording "at least one" represents a number of one or more, and "a plurality of" represents a number more than two.

With the continuous development of information technology, vehicle-to-everything (V2X), as a new generation of information and communication technology that crosses fields of communication, vehicle, and transportation, has become a highly promising research hotspot. As the main candidate technology for global vehicle-to-everything, cellular vehicle-to-everything (C-V2X) technology is also receiving increasing attention.

For ease of understanding, a brief introduction to V2X and C-V2X technologies is illustrated as follows.

V2X is an abbreviation for vehicle-to-everything, which is used to implement comprehensive communication among on board units, surrounding environment and network. For example, V2X may implement any communication and interconnection between vehicles to vehicle-to-vehicle (V2V), vehicle-to-infrastructure (V2I), vehicle-to-pedestrian (V2P), and vehicle-to-network (V2N).

C-V2X is an abbreviation for cellular vehicle-to-everything, which is a V2X technology that integrates cellular communication and direct communication.

In the C-V2X technology that integrates direct communication, data transmission may be performed between terminals (e.g., on board units, road side units, etc.) through a PC5 interface of the direct link, enabling communication and interconnection such as V2V, V2I, and V2P without passing through a base station, supporting two scenarios: within cellular coverage and outside cellular coverage.

In the C-V2X technology that integrates cellular communication, V2N communication may be implemented between a terminal (e.g., on board units, road side units, etc.) and a base station through a Uu interface, and V2V, V2I, and V2P communication may be implemented based on data forwarding from the base station. With the evolution of cellular mobile communication systems from 4G to 5G, C-V2X includes LTE-V2X and NR-V2X. It can be understood that with the evolution of communication systems, C-V2X may further include other vehicle-to-everything technologies suitable for future communication technologies.

However, C-V2X for some technologies still face some issues.

On the one hand, in the C-V2X technology that integrates direct communication, deploying a brand new PC5 V2X network faces problems such as excessive investment in full coverage, low user penetration rate of an on board unit (OBU) using a PC5 interface, and poor operational capabilities, making it difficult to put the C-V2X technology that integrates direct communication into large-scale use.

On the other hand, in the C-V2X technology that integrates cellular communication, since communication between terminals (e.g., on board units) is implemented through a Uu interface, there may be service interruptions or reduced service continuity of the on board units when the terminals cross different integrated sensing and communication units (such as road side units) or cross base stations with different integrated sensing and communication units.

In this regard, a vehicle-to-everything communication method is provided in the embodiments of the present disclosure, which may be used to ensure service continuity of the on board units when crossing different integrated sensing and communication units. The method includes: a first road side unit receives forwarding information of a target vehicle-mounted unit sent from a second road side unit, where the target vehicle-mounted unit is a vehicle-mounted unit that communicates with the second road side unit, and the forwarding information of the target vehicle-mounted unit comprises an identification of the target vehicle-mounted unit; and stores the forwarding information of the target vehicle-mounted unit in a forwarding table.

It should be noted that the vehicle-to-everything communication method provided in the present disclosure may be applied to systems in various communication standards. For example, the method provided in the embodiments of the present disclosure may be applicable to systems, including but not limited to, a long term evolution (LTE) system, various versions based on LTE advanced, a 5G system, and a new radio (NR), or other next generation communication systems. In addition, the method provided in the embodiments of the present disclosure may further be applicable to future-oriented communication technologies, etc.

A network architecture of a communication network in the embodiments of the present disclosure may include integrated sensing and communication units (for example, including but not limited to road side units, base stations, road side sensing devices, etc.) and terminals (for example, including but not limited to on board units). In some embodiments, the network architecture may also include a server (e.g., a server or core network).

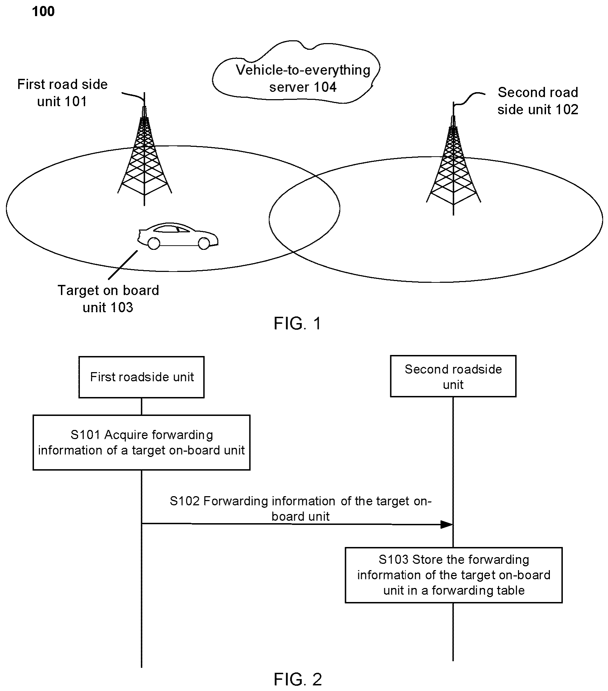

For example, taking an integrated sensing and communication unit being a road side unit (RSU), and a terminal being an on board unit, FIG. 1 shows a schematic diagram of an architecture of a communication system. Referring to FIG. 1, the communication system 100 may include, but not limited to, a road side unit (e.g., a first road side unit 101, a second road side unit 102) and an on board unit (e.g., a target on board unit 103 in FIG. 1). In some embodiments, still as shown in FIG. 1, the communication system 100 further includes a server (such as a vehicle-to-everything server 104 in FIG. 1).

A road side unit is a device installed on a road side to implement the V2X communication. For example, the road side unit may be a base station itself. For example, the road side unit may include at least one of: a large-scale of active antenna units (AAUs) that constitutes a base station, a building base band unit (BBU), or a radio remote unit (RRU). For example, the road side unit may also be a road side sensing system. For example, the road side unit may also be other devices with service functions (such as data transmission and reception) and/or management functions. For example, the road side unit may be a virtual road side unit (vRSU). For example, the road side unit may also be devices in the form of cameras, laser radars, millimeter wave radars, or industrial computers. In some embodiments, the road side unit may also be a combination of one or more of the above items. In one example, the road side unit may be a combination of one or more of BBU, AAU, and the road side sensing system. It should be understood that forms or functions of the road side unit mentioned above is merely examples, which are not limited in the present disclosure. The road side unit may be deployed together with a traffic light, a solar street light, a tree, a building, an apparatus, a base station, or a utility pole in a scene, or may be independently deployed in the scene, which is not limited in the present disclosure. In some examples, the road side unit at least includes a communication unit, and the communication unit supports the Uu interface for V2N communication. In other examples, the communication unit also supports the PC5 interface for V2I communication. It can be understood that in a case where an on board unit is within a service range of a road side unit, data transmission may be performed with the road side unit.

A on board unit is a device installed on a vehicle to implement the V2X communication. For example, the on board unit may be an on-board navigation system, or the on board unit may be other forms of on-board hardware or software devices. Contents and forms of the on board unit are not limited the embodiments of the present disclosure. On board units may be integrated to form communication networks, for example, the on board units may be integrated to form 4G/5G Uu communication chips and modules, LTE-V2X/5G NR-V2X communication chips and modules. The on board unit may use Uu interface and/or PC5 interface. In some examples, basic functions of the on board unit include service functions, for example, a basic function of the on board unit may include at least one of the following service functions: data transmission and reception, protocol conversion, reading CAN (Controller Area Network) bus data, positioning, and time synchronization. In the present disclosure, functions of the on board unit are not limited.

The server is used to provide services to an on board unit, for example, the server may provide services related to the vehicle-to-everything. The server may be a server (for example, a vehicle-to-everything server), or may be a core network, or may be some nodes in the core network. In the present disclosure, a form of the server is not limited. In some embodiments, the server and the on board unit communicate with each other through the on board unit. For example, the server may send service information to the on board unit through the road side unit. As another example, the server may receive registration information of the on board unit through the road side unit, and the on board unit may be registered according to the registration information.

It should be noted that although only a single on board unit and two road side units are shown in FIG. 1, there may actually be more on board units or road side units. For example, an on board unit may gradually cross service ranges of three or more different road side units. For example, a plurality of on board units may simultaneously or sequentially cross from a service range of one road side unit to a service range of another road side unit, which is not limited in the present disclosure.

Considering that an IP (Internet Protocol) address of an on board unit may change as the on board unit moves, in a case where communication between the on board unit and the road side unit is performed by using the Uu interface, if a transmission control protocol (TCP) is used, there is a TCP connection between the on board unit and the server, and the TCP connection includes a quadruple including the IP address of the on board unit. Therefore, when the IP address of the on board unit changes, the TCP connection between the on board unit and the server will be interrupted. If it is necessary to re-establish the TCP connection between the on board unit and the server, a three-way handshake is needed, which may cause a significant latency, and affect the continuity of the service.

Therefore, in the embodiments of the present disclosure, a connection between the on board unit and the server is established based on the user datagram protocol (UDP), and communication between the on board unit and the road side unit is performed by using the UDP protocol.

It should be understood that unlike TCP, in a UDP connection, a sender does not need to establish a connection before transmitting data, and only needs to know a recipient's IP address and port number, so as to send a data packet. The recipient may receive data from any IP address on a specified port, but does not need to provide any confirmation to the sender. And after the recipient receives a UDP packet, the recipient may obtain an IP address and a port number of the sender corresponding to the UDP packet.

In a protocol derived from UDP, which is called quick UDP Internet connection (QUIC), a QUIC connection may be identified only by a random number generated from the server as an ID (identification). This way, as long as the ID remains unchanged, even if the IP address or port number of the on board unit changes, the connection between the server and the on board unit is still maintained. Therefore, there is no need to re-establish the connection, which may to some extent ensure the continuity of service of the on board unit.

It should be understood that the above-mentioned communication systems may also have other names (such as communication network, network system, network architecture, or communication architecture, etc.), and the above-mentioned communication systems may also include other possible network structures (such as core network elements, etc.), which are not limited in the embodiments of the present disclosure.

In addition, the above-mentioned communication systems are merely for more clearly illustrating the technical solutions of the present disclosure, and do not constitute a limitation on the present disclosure. Those of ordinary skill in the art should know that with the evolution of the network architecture and the emergence of new service scenarios, the technical solutions provided in the present disclosure are also applicable to similar technical problems.

In order to illustrate the technical solutions provided in the embodiments of the present disclosure more clearly, the vehicle-to-everything communication method provided in the embodiments of the present disclosure will be illustrated below.

FIG. 2 shows a vehicle-to-everything communication method provided in the embodiments of the present disclosure. Referring to FIG. 2, the method includes S101 to S103.

In S101, a second road side unit acquires forwarding information of a target on board unit.

The target on board unit is an on board unit that communicates with the second road side unit.

In some embodiments, the forwarding information includes an identification of the target on board unit.

In some embodiments, the forwarding information further includes at least one of the following:
a service requirement of the target on board unit;
a port number of the target on board unit;
an IP address of the target on board unit; or
a service state of the target on board unit.

In some embodiments, there is a corresponding relationship between the service requirement of the target on board unit and the port number of the target on board unit. For example, a service requirement of the target on board unit correspond to a unique port number of the target on board unit. As another example, if the service requirement of the target on board unit is bound to the port number of the target on board unit, and in a case where the forwarding information includes the service requirement of the target on board unit, the second road side unit may determine the port number of the target on board unit according to the service requirement and the corresponding relationship.

In some embodiments, the service state of the target on board unit is used to indicate whether the target on board unit is in an active or inactive state.

For the convenience of understanding the service state of the target on board unit, the following provides an exemplary explanation of the active state and inactive state of the target on board unit.

### (1) Active state

If a service state of a target on board unit stored in a road side unit is an active state, a relationship between the road side unit and the target on board unit may meet any one of the following situations 1-1 to 1-4.

Situation 1-1: The target on board unit has moved to a service range of the road side unit.

Situation 1-2: The target on board unit is capable of communicating with the road side unit.

For example, the target on board unit may transmit service data with the road side unit. As another example, the target on board unit establishes a communication connection with the road side unit.

Situation 1-3: The road side unit has received information sent from the target on board unit.

Situation 1-4: The road side unit is providing a service to the target on board unit.

### (2) Inactive state

If the service state of the target on board unit stored in the road side unit is an inactive state, a relationship between the road side unit and the target on board unit may meet any one of the following situations 2-1 to 2-6.

Situation 2-1: The target on board unit has not yet moved to the service range of the road side unit.

Situation 2-2: The target on board unit is not communicating with the road side unit.

For example, the target on board unit has not sent any information to the road side unit or has not established a communication connection with the road side unit.

Situation 2-3: The target on board unit has not communicated with the road side unit within a first preset time.

The first preset time may also have other names, such as activation waiting time or active-time, which is not limited in the present disclosure.

Situation 2-4: The target on board unit is communicating with other road side units adjacent to the road side unit.

Situation 2-5: The target on board unit may communicate with or pass through the service range of the road side unit in a next time period (e.g., a preset time duration).

Situation 2-6: A road side unit that has an association relationship with the road side unit is providing services to the target on board unit.

For example, a road side unit adjacent to the road side unit is providing services to the target on board unit. As another example, a road side unit belonging to the same preset road side unit group as the road side unit is providing services to the target on board unit.

It should be understood that the possible situations of the active state and inactive state mentioned above are only examples, which are not limited in the present disclosure.

In some embodiments, the forwarding information of the target on board unit is acquired based on information sent from the target on board unit. Furthermore, after acquiring the forwarding information of the target on board unit, the second road side unit may set the service state of the target on board unit to an active state in a forwarding table.

In some embodiments, in a case where the service state in the forwarding information is in an active state, and information is not received from the target on board unit within the first preset time, the second road side unit sets the service state in the forwarding information to an inactive state.

For example, in a case where the service state in the forwarding information is an active state, the second road side unit sends a V2X message to the IP address of the target on board unit. If no message is received from the target on board unit within the first preset time, the service state of the target on board unit is set to an inactive state. In some examples, the message sent from the target on board unit may include at least one of the following: service access request information, basic safety message (BSM), road side information (RSI)/road side safety message (RSM), signal phase timing message (SPAT), and map message, etc., or the message may also be any message sent from the target on board unit to the second road side unit.

In some embodiments, S101 may, for example, be implemented as: the second road side unit receiving service access request information of the target on board unit, and generating the forwarding information according to the service access request information.

The service access request information at least include the identification of the target on board unit. In some examples, the service access request information may further include at least one of the following:
a service requirement of the target on board unit;
a port number of the target on board unit; or
an IP address of the target on board unit.

For example, the second road side unit receives the service access request information of the target on board unit, and the service access request information includes the identification of the target on board unit, the service requirement of the target on board unit, and the IP address of the target on board unit. Therefore, the second road side unit may generate the forwarding information based on the service access request information, and the forwarding information at least includes the identification of the target on board unit, the service requirement of the target on board unit, the IP address of the target on board unit, and the service state of the target on board unit. The service state of the target on board unit is set to an active state.

In some embodiments, the service access request information including the IP address of the target on board unit may be understood as: the service access request information being carried in an uplink message sent from the target on board unit, and the IP address of the target on board unit existing in the uplink message; alternatively, the IP address of the target on board unit not existing in the uplink message, but being capable of being determined by the second road side unit based on parsing of the uplink message.

In some embodiments, the service access request information is sent from the target on board unit to the second road side unit based on the Uu interface.

In some embodiments, the service access request is sent from the target on board unit to the second road side unit using UDP or QUIC.

In some embodiments, the second road side unit adds or stores the forwarding information of the target on board unit in a forwarding table of the second road side unit itself after acquiring the forwarding information. The forwarding table of the second road side unit includes forwarding information of a plurality of on board units.

In some embodiments, the second road side unit may also update the forwarding information of the target on board unit stored in the forwarding table of the second road side unit itself based on the information sent from the target on board unit. For example, as the target on board unit moves, the IP address of the target on board unit may change. The second road side unit may further update the IP address of the target on board unit in the forwarding information according to the information sent from the target on board unit.

In some embodiments, the second road side unit may also perform data transmission with the target on board unit based on the forwarding information of the target on board unit.

For example, in the case where the forwarding information includes the identification and IP address of the target on board unit, the second road side unit may acquire service data of the target on board unit from the server (such as the vehicle-to-everything server) according to the identification, and send the service data to the IP address of the target on board unit.

In some embodiments, the second road side unit and the target on board unit use UDP or QUIC to perform data transmission.

It should be understood that when using UDP or QUIC connections to perform data transmission, the UDP or QUIC connection established between the target road side unit and the server is a connection that takes the identification of the target on board unit as an index. Therefore, as long as the identification of the target on board unit remains unchanged, even if the IP address or port number of the target on board unit changes, the connection between the server and the target on board unit is still maintained, and there is no need to re-establish the connection, or re-register the target on board unit on the server. In this way, service continuity under a situation that the target on board unit crosses different road side units may be ensured.

In some embodiments, in a case where the second road side unit and the target on board unit use QUIC to perform data transmission, the identification of the target on board unit may also be associated with an ID generated by the server, or the identification of the target on board unit may be bound to the ID generated by the server, or the identification of the target on board unit may correspond to the ID generated by the server.

It should be understood that the QUIC connection may only use random numbers generated by the server as an ID to identify the target on board unit. Since the identification of the target on board unit is unique and unchanged, as long as the identification of the target on board unit remains unchanged, even if the IP address or port number of the target on board unit changes, the ID generated by the server corresponding/bound/associated with the identification remains unchanged. Therefore, the connection between the server and the target on board unit is still maintained, and there is no need to re-establish the connection or re-register the target on board unit on the server. In this way, service continuity under a situation that the target on board unit crosses different road side units may be ensured.

In S102, the second road side unit sends the forwarding information of the target on board unit to a first road side unit; correspondingly, the first road side unit receives the forwarding information of the target on board unit sent from the second road side unit.

In some embodiments, there is an association relationship between the first road side unit and the second road side unit. For example, the first road side unit may be a unit adjacent to the second road side unit. For example, the second road side unit is associated with a road side unit group, and the road side unit group at least includes the first road side unit. It should be understood that the detailed association relationship between the first road side unit and the second road side unit is not limited in the present disclosure.

In some embodiments, the second road side unit sends the forwarding information of the target on board unit to the first road side unit in a case where at least one of the following conditions 1-1 to 1-3 is met.

Condition 1-1: A preset cycle starting point is achieved.

For example, in a case where the preset cycle starting point is achieved, the second road side unit sends the forwarding information of the target on board unit to the first road side unit. In this way, a forwarding table in the first road side unit may be updated periodically.

Condition 1-2: The forwarding information of the target on board unit in the forwarding table of the second road side unit has changed.

For example, in a case where the second road side unit adds or stores the forwarding information of the target on board unit, or updates the forwarding information of the target on board unit, the second road side unit sends the forwarding information of the target on board unit to the first road side unit. In this way, it may avoid repeatedly transmitting the forwarding information between the first road side unit and the second road side unit, thus to save the cost.

Condition 1-3: A service state in the forwarding information of the target on board unit stored by the second road side unit is an active state.

Conditions 1-3 may be understood by combining the explanation for the inactive state in the above description. For example, in a case where the target on board unit has not yet moved to a service range of a certain road side unit, if the road side unit stores the forwarding information of the target on board unit with a service state being an inactive state, the road side unit may not continue to transmit or send the forwarding information to other road side units.

In this way, the forwarding information of the target on board unit may be avoided from being infinitely transmitted, so that the forwarding information is only stored in the second road side unit that communicates with the target on board unit, as well as the road side unit that has an association relationship with the second road side unit (such as the first road side unit). The association relationship may refer to the description mentioned above, and may not be repeated herein.

In some embodiments, the second road side unit sends the forwarding information of the target on board unit to the first road side unit through a connection interface between base stations. In some examples, the connection interface between base stations includes at least one of the following: Xn interface, N2 interface, or tunnel connection.

In some embodiments, the first road side unit may further send a response message to the second road side unit after receiving the forwarding information of the target on board unit. In some examples, the response information is used to indicate whether reception is successful or failed.

In S103, the first road side unit stores the forwarding information of the target on board unit in a forwarding table.

In some embodiments, the forwarding table includes forwarding information of a plurality of on board units. Forwarding information of each on board unit corresponds to the identification of the on board unit. In some examples, the first road side unit may determine the forwarding information of the on board unit corresponding to the identification from the forwarding table according to the identification of the on board unit.

In some embodiments, the first road side unit stores the forwarding information of the target on board unit in the forwarding table and sets the service state of the target on board unit to an inactive state.

In some embodiments, in a case where the service state in the forwarding information is an inactive state, if information sent from the target on board unit is not received within a second preset time, the first road side unit deletes the forwarding information of the target on board unit. The second preset time may also have other names, such as standby waiting time, inactive waiting time, or standby-time, etc., which is not limited in the present disclosure.

It should be understood that in the inactive state, if the first road side unit does not receive the information sent from the target on board unit within the second preset time, it means that the target on board unit may not pass through the service range of the first road side unit or may not communicate with the first road side unit. Therefore, the forwarding information is deleted from the forwarding table of the first road side unit to save the storage space.

In other embodiments, in a case where the service state in the forwarding information is an inactive state, if the information sent from the target on board unit is received within the second preset time, the first road side unit switches the service state in the forwarding information of the target on board unit from the inactive state to an active state.

It should be understood that in the inactive state, if the first road side unit receives the information sent from the target on board unit within the second preset time, it means that the target on board unit may have moved to the service range of the first road side unit, or the target on board unit may communicate with the first road side unit, or the target on board unit is about to establish a communication connection with the first road side unit, or the like, therefore, the service state is switched to the active state for subsequent data transmission between the target on board unit and the first road side unit.

The vehicle-to-everything communication method provided in the embodiments of the present disclosure may enable the first road side unit to acquire the identification of the target on board unit that communicates with the second road side unit in advance. Therefore, in a case where the target on board unit moves from a service range of the second road side unit to a service range of the first road side unit, since the identification of the target on board unit already exists in the first road side unit, the first road side unit does not need to register the target on board unit with the server or assist in establishing a connection between the target on board unit and the server, thus ensuring the service continuity of the on board unit upon crossing different road side units.

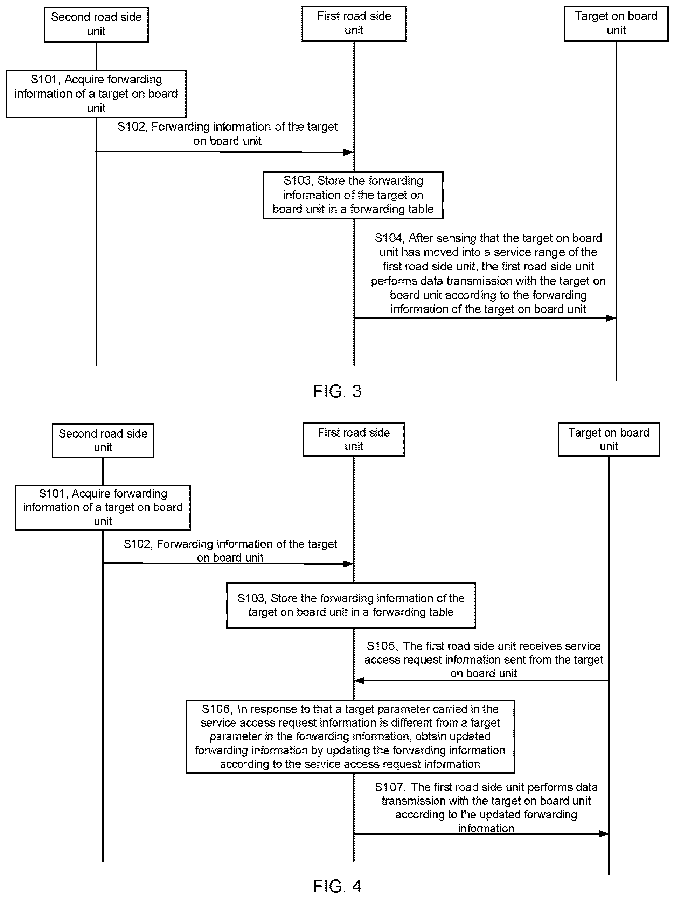

In some embodiments, as shown in FIG. 3, after S103, the method further includes S104.

In S104, after sensing that the target on board unit has moved into a service range of the first road side unit, the first road side unit performs data transmission with the target on board unit according to the forwarding information of the target on board unit.

In some embodiments, the first road side unit may sense whether the target on board unit has moved into the service range of the first road side unit itself through various ways.

In some examples, the first road side unit may sense whether the target on board unit has moved into the service range of the first road side unit itself according to whether the information sent from the target on board unit is received. For example, if the information carrying the identification of the target on board unit is received, the first road side unit considers that the target on board unit has moved into the service range of the first road side unit.

In some other examples, the first road side unit may further sense whether the target on board unit has moved into the service range of the first road side unit by combining camera shooting, radar ranging, and other ways.

It should be understood that a sensing method of the first road side unit is not limited in the present disclosure.

In some embodiments, after sensing that the target on board unit has moved into the service range of the first road side unit, the first road side unit sets the service state of the target on board unit to an active state. For example, after receiving the information carrying the identification of the target on board unit, the first road side unit sets the service state of the target on board unit to an active state.

In some embodiments, in a case where the service state of the target on board unit stored in the first road side unit is an active state, the first road side unit performs data transmission with the target on board unit according to the forwarding information of the target on board unit.

It should be understood that in a case where the service state of the target on board unit stored in the road side unit is an inactive state, the target on board unit may not have moved into the service range of the first road side unit, so data transmission may only be performed in a case where the service state is an active state. In this way, data loss or unnecessary communication overhead may be avoided.

In some embodiments, the forwarding table of the first road side unit includes forwarding information of on board units with a quantity of Num. The first road side unit may determine the forwarding information of K on board units from the Num pieces of forwarding information, and service states in the forwarding information of the K on board units are active states. The first road side unit may perform data transmission with the K on board units according to the forwarding information of the K on board units. Num is a positive integer, and K is a positive integer less than or equal to Num. In this way, data transmission between a single road side unit and a plurality of on board units may be implemented.

In some embodiments, uplink data transmitted from the target on board unit to the first road side unit at least includes the identification of the target on board unit. In some examples, the uplink data further includes at least one of the following: a service requirement of the target on board unit, an IP address of the target on board unit, and a port number of the target on board unit.

In some embodiments, downlink data sent from the first road side unit to the target on board unit includes, but not limited to at least one of the following:
a service IP address of the first road side unit;
a service port number of the first road side unit;
a service IP address of at least one road side unit (such as the second road side unit) that has an association relationship with the first road side unit;
a service port number of at least one road side unit (such as the second road side unit) that has an association relationship with the first road side unit;
service data of the target on board unit; or
response information used to respond to the uplink data of the target on board unit.

In some embodiments, for example, S104 may be implemented as: after sensing that the target on board unit has moved into the service range of the first road side unit, the first road side unit acquires the service data of the target on board unit from the server according to the identification of the target on board unit, and performs transmission for the service data with the target on board unit based on the IP address of the target on board unit in the forwarding information.

In some embodiments, the first road side unit and the target on board unit use UDP or QUIC to perform data transmission.

It should be understood that when using UDP or QUIC connections to perform data transmission, the UDP or QUIC connection established between the target road side unit and the server is a connection that takes the identification of the target on board unit as an index. Therefore, as long as the identification of the target on board unit remains unchanged, even if the IP address or port number of the target on board unit changes, the connection between the server and the target on board unit is still maintained.

Furthermore, during a process of the target on board unit moving from a service range of the second road side unit into the service range of the first road side unit, since the first road side unit has already acknowledged the identification of the target on board unit in advance, the first road side unit does not need to re-establish the connection or re-register the target on board unit at the server. For example, after the target on board unit has moved into the service range of the first road side unit, the first road side unit may not need to re-register the target on board unit on the server. Instead, the first road side unit may acquire the service data of the target on board unit from the server according to the identification of the target on board unit, and send the service data to the target on board unit according to the IP address of the target on board unit in the forwarding table of the first road side unit itself.

Based on this, service continuity under a situation that the target on board unit crosses different road side units may be ensured.

In some embodiments, in a case where the second road side unit and the target on board unit use QUIC to perform data transmission, the identification of the target on board unit may also be associated with an ID generated by the server, or the identification of the target on board unit may be bound to the ID generated by the server, or the identification of the target on board unit may correspond to the ID generated by the server.

It should be understood that the QUIC connection may only use random numbers generated by the server as an ID to identify the target on board unit. Since the identification of the target on board unit is unique and unchanged, as long as the identification of the target on board unit remains unchanged, even if the IP address or port number of the target on board unit changes, the ID generated by the server corresponding/bound/associated with the identification remains unchanged. Therefore, the connection between the server and the target on board unit is still maintained. During the process of the target on board unit moving from a service range of the second road side unit into the service range of the first road side unit, since the first road side unit has already acknowledged the identification of the target on board unit in advance, the first road side unit does not need to re-establish the connection or re-register the target on board unit at the server. In this way, service continuity under a situation that the target on board unit crosses different road side units may be ensured.

In some embodiments, the first road side unit may also update forwarding information stored by the first road side unit itself, and perform data transmission according to the updated forwarding information. For example, as shown in FIG. 4, after S103, the above-mentioned method further includes the following S105 to S107.

In S105, the first road side unit receives service access request information sent from the target on board unit.

In some embodiments, the service access request information carries a target parameter, and the target parameter at least includes the identification of the target on board unit. In some examples, the target parameters also include at least one of the following:
a service requirement of the target on board unit;
a port number of the target on board unit; or
an IP address of the target on board unit.

In some embodiments, after receiving the service access request information, the first road side unit sets the service status of the target on board unit to an active state.

In S106, in response to that a target parameter carried in the service access request information is different from a target parameter in the forwarding information, the first road side unit obtains updated forwarding information by updating the forwarding information according to the service access request information.

In S107, the first road side unit performs data transmission with the target on board unit according to the updated forwarding information.

Furthermore, the first road side unit may further send the updated forwarding information to the second road side unit, so that the second road side unit may update the forwarding information of the target on board unit stored in the forwarding table of the second road side unit itself.

In this way, updating the forwarding information of the target on board unit in the road side unit may be implemented, thus to ensure the correct transmission of data, and improve the reliability of communication.

To provide a clearer explanation of solutions, the following provides an exemplary explanation of a method for storing or updating the forwarding information of the target on board unit in the forwarding table of the road side unit (such as the first road side unit and/or the second road side unit).

In some embodiments, a forwarding table of a road side unit includes forwarding information of a plurality of on board units, and forwarding information of each on board unit corresponds to an identification of the on board unit.

As an example, in a case where the forwarding information of the target on board unit is received, if the identification of the target on board unit exists in the forwarding table, the road side unit updates the forwarding information of an on board terminal corresponding to the identification of the target on board unit in the forwarding table with the forwarding information of the target on board unit.

As another example, in a case where the forwarding information of the target on board unit is received, if the identification of the target on board unit does not exist in the forwarding table, the road side unit adds/stores the forwarding information of the target on board unit in the forwarding table.

Furthermore, if the forwarding information of the target on board unit is sent from other road side units that have an association relationship with the road side unit, the road side unit may set the service state of the target on board unit to an inactive state; alternatively, if the forwarding information of the target on board unit is acquired by the road side unit based on information sent from the target on board unit, the road side unit may set the service state of the target on board unit to an active state.

It should be noted that as the communication situation changes, the service state of the target on board unit may also change accordingly, for example, the description mentioned above may be referred, which may not be repeated herein. In addition, there may be other possible ways for updating or storage of the forwarding table, which are not limited in the present disclosure.

In some embodiments, the first road side unit and the second road side unit are configured with a same access IP address and a same access port number, and the access IP address and the access port number are used for performing service access with the target on board unit.

In some embodiments, the first road side unit and the second road side unit are configured with a same service IP address and a same service port number, and the service IP address and the service port number are used for performing data transmission and service access with the target on board unit.

In some embodiments, the first road side unit and the second road side unit are configured with different service IP addresses and different service port numbers.

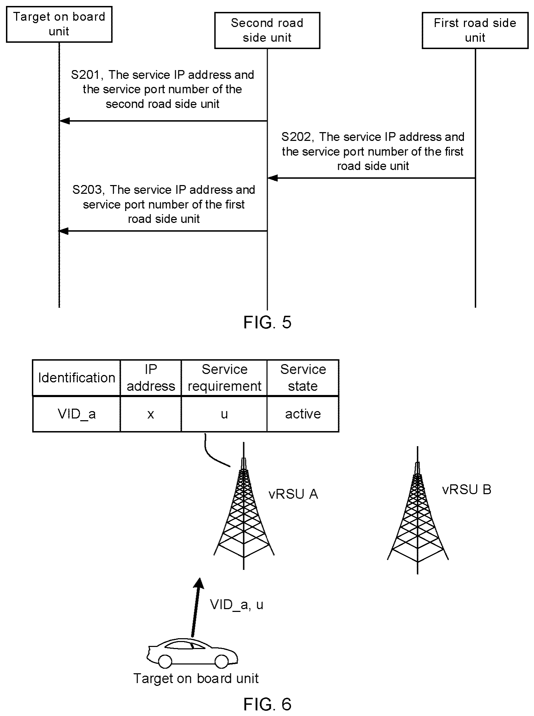

In a case where there are different service IP addresses and different service port numbers between the first road side unit and the second road side unit, in order to ensure the service continuity for the target on board unit after crossing road side units (such as crossing from a service range of the second road side unit to a service range of the first road side unit), a vehicle-to-everything communication method is further provided in the present disclosure. As shown in FIG. 5, the method includes S201 to S203.

In S201, the second road side unit sends the service IP address and the service port number of the second road side unit to the target on board unit.

In some embodiments, in a case where an access request of the target on board unit is received, the second road side unit sends the service IP address and the service port number of the second road side unit itself to the target on board unit.

In other some embodiments, in a case where an access request of the target on board unit is received, and identity authentication and authorization of the target on board unit is completed, the second road side unit sends the service IP address and the service port number of the second road side unit itself to the target on board unit.

In some embodiments, the access request is sent from the target on board unit based on the access IP address and access port number, or the access request is monitored by the second road side unit from the access IP address and access port number.

In some embodiments, the second road side unit performs identity authentication and authorization on the target on board unit based on the access request sent from the target on board unit.

In S202, the first road side unit sends the service IP address and the service port number of the first road side unit to the second road side unit; correspondingly, the second road side unit acquires the service IP address and service port number of the first road side unit.

In some embodiments, in a case where at least one of the following conditions 2-1 to 2-3 is met, the first road side unit sends the service IP address and service port number of the first road side unit to the second road side unit.

Condition 2-1: The first road side unit receives the forwarding information of the target on board unit sent from the second road side unit.

Condition 2-2: A preset cycle starting point is achieved.

Condition 2-3: The first road side unit receives an acquisition request sent from the second road side unit for the service IP address and service port number.

It should be noted that the above conditions are only examples, which are not limited in the present disclosure.

It should be understood that S202 may be performed before or after any of S101 to S103. In some embodiments, S202 may not be performed, for example, the service IP address and service port number of the first unit are configured by default in the second road side unit, which is not limited in the present disclosure.

In S203, the second road side unit sends the service IP address and service port number of the first road side unit to the target on board unit.

It should be understood that S201 may be performed before or after S202, which is not limited in the present disclosure.

Based on this, it is possible to ensure the service continuity for an on board unit upon crossing road side units, even if there are different service IP addresses and service port numbers between the first road side unit and the second road side unit.

To illustrate the solutions more clearly, taking the second road side unit being vRSU A, the first road side unit being vRSU B, and the target on board unit using UDP protocol for bidirectional communication with vRSU A and vRSU B respectively below as an example to perform exemplary illustration.

### Example 1

For a situation where vRSU A and vRSU B have the same service IP address and the same service port number, as shown in FIG. 6, the target on board unit sends service access request information to vRSU A through the Uu interface. The service access request information includes an identification VID_a of the target on board unit and a service requirement u.

The vRSU A parses the service access request information (such as a message carrying the service access request information) sent from the target on board unit to obtain an IP address x of the target on board unit.

The vRSU A adds forwarding information of the target on board unit in the forwarding table of the vRSU A itself, and the forwarding information includes: the identification of the target on board unit, the service requirement of the target on board unit, the IP address of the target on board unit, and a service state of the target on board unit. The service state is set to an active state.

The vRSU A sends V2X information to the target on board unit according to the forwarding information of the target on board unit. If vRSU A does not receive any messages from the target on board unit within the first preset time, the service state of the target on board unit may be set to an inactive state (not shown in the figure).

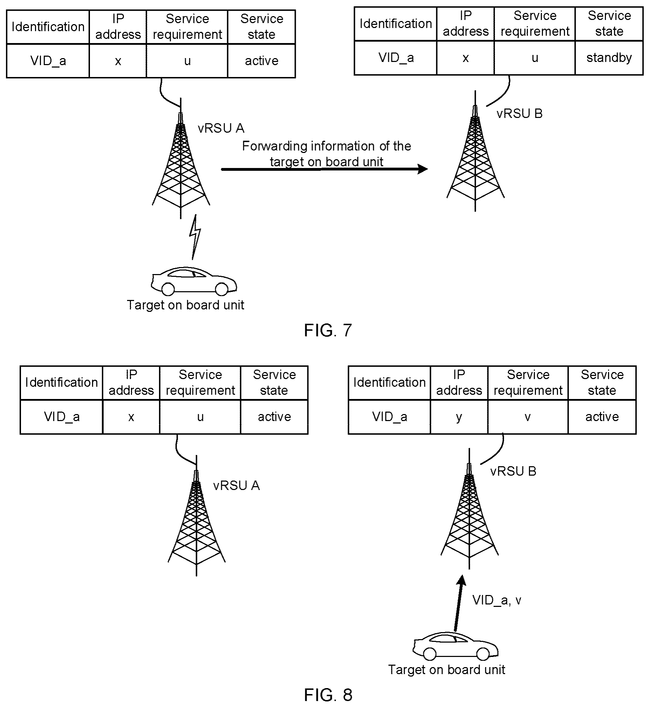

As shown in FIG. 7, the vRSU A sends the forwarding information of the target on board unit to the vRSU B through a connection interface between base stations (such as an Xn interface, an X2 interface, or a tunnel connection). The vRSU B updates forwarding table of the vRSU B itself according to the forwarding information of the target on board unit, and sets the service state of the target on board unit to an inactive state (i.e., standby state).

As shown in FIG. 8, after the target on board unit senses that the target on board unit has moved within a service range of the vRSU B, the target on board unit sends service access request information to the vRSU B. The service access request information includes: an identification VID_a of the target on board unit, and a service requirement u or an updated service request v. If the vRSU B does not receive the information sent from the target on board unit within a second preset time, the vRSU B deletes the forwarding information of the target on board unit from the forwarding table of the vRSU B itself.

The vRSU B parses the service access request information (such as a message carrying the service access request information) sent from the target on board unit, obtains the identification of the target on board unit, and the IP address x or updated IP address y of the target on board unit.

If the identification of the target on board unit exists in the forwarding table of the vRSU B itself, the vRSU B updates the forwarding information of the target on board unit in the forwarding table of the vRSU B itself. FIG. 8 only shows the situation where the vRSU B receives the updated IP address y and the updated service requirement v. The vRSU B sets the service state of the target on board unit to an active state.

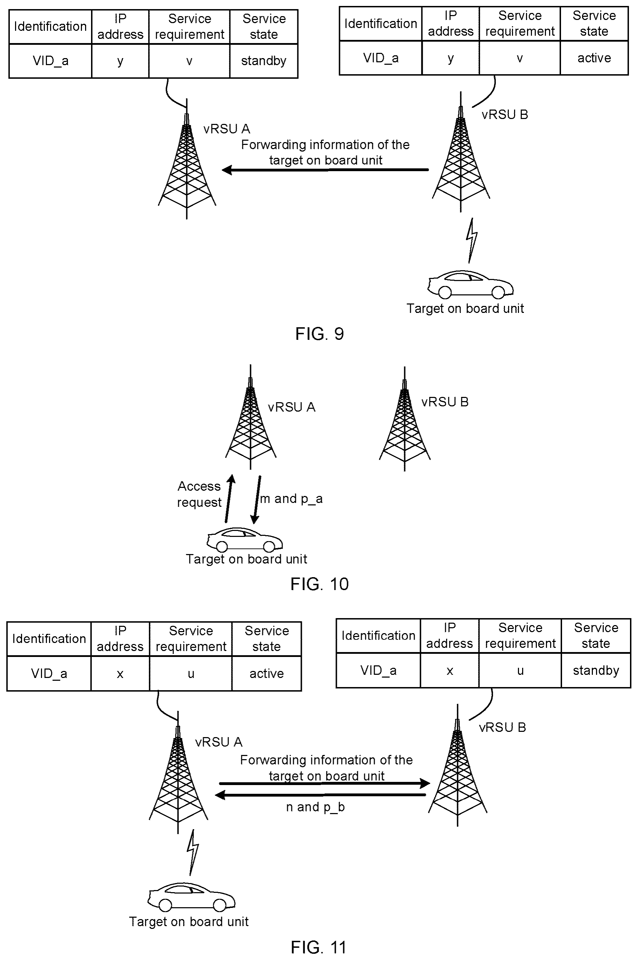

As shown in FIG. 9, the vRSU B sends forwarding information of the target on board unit to the vRSU A through a connection interface between base stations (such as an Xn interface, an X2 interface, or a tunnel connection). The vRSU A updates forwarding table of the vRSU A itself according to the forwarding information of the target on board unit sent from the vRSU B, and sets the service state of the target on board unit to an inactive state (i.e., standby state).

The vRSU B communicates with the target on board unit based on the forwarding information of the target on board unit in the forwarding table of the vRSU itself.

### Example 2

For a situation where vRSU A and vRSU B have different service IP addresses and different port numbers, as shown in FIG. 10, the target on board unit sends an access request to vRSU A through the Uu interface with a destination address being a preconfigured access IP address and access port number. The vRSU A receives the access request, and sends a service IP address m of the vRSU A and a service port number p_a of the vRSU A to the target on board unit after completing identity authentication and authorization.

Still as shown in FIG. 6, the target on board unit sends service access request information to vRSU A through the Uu interface. The service access request information includes an identification VID_a of the target on board unit and a service requirement u. A destination address of the service access request information is the service IP address m of vRSU A and the service port number p_a of vRSU A.

The vRSU A parses the service access request information (such as a message carrying the service access request information) sent from the target on board unit to obtain an IP address x of the target on board unit.

The vRSU A adds forwarding information of the target on board unit in the forwarding table of the vRSU A itself, and the forwarding information includes: the identification of the target on board unit, the service requirement of the target on board unit, the IP address of the target on board unit, and a service state of the target on board unit. The service state is set to an active state.

The vRSU A sends V2X information to the target on board unit according to the forwarding information of the target on board unit. If vRSU A does not receive any messages from the target on board unit within the first preset time, the service state of the target on board unit may be set to an inactive state (not shown in the figure).

As shown in FIG. 11, the vRSU A sends the forwarding information of the target on board unit to the vRSU B through a connection interface between base stations (such as an Xn interface, an X2 interface, or a tunnel connection). The vRSU B updates forwarding table of the vRSU B itself according to the forwarding information of the target on board unit, and sets the service state of the target on board unit to an inactive state (i.e., standby state). The vRSU B further sends the service IP address n of the vRSU B and the service port number p_b of the vRSU B to vRSU A.

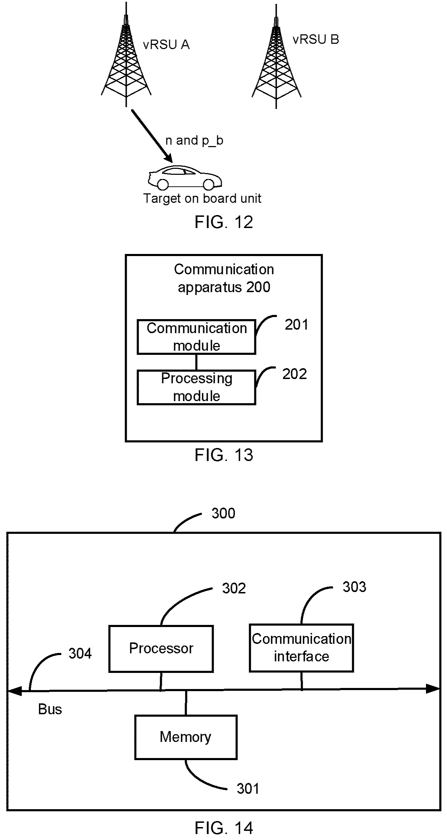

As shown in FIG. 12, vRSU A sends the service IP address n and service port number p_b of vRSU B to the target on board unit through the Uu interface.

Still as shown in FIG. 8, after the target on board unit senses that the target on board unit has moved within a service range of the vRSU B, the target on board unit sends service access request information to the vRSU B by using the service IP address n of the vRSU B and the service port number p_b of the vRSU B. The service access request information includes: an identification VID_a of the target on board unit, and a service requirement u or an updated service request v. If the vRSU B does not receive the information sent from the target on board unit within a second preset time, the vRSU B deletes the forwarding information of the target on board unit from the forwarding table of the vRSU B itself.

The vRSU B parses the service access request information (such as a message carrying the service access request information) sent from the target on board unit, obtains the identification of the target on board unit, and the IP address x or updated IP address y of the target on board unit.

If the identification of the target on board unit exists in the forwarding table of the vRSU B itself, the vRSU B updates the forwarding information of the target on board unit in the forwarding table of the vRSU B itself. FIG. 8 only shows the situation where the vRSU B receives the updated IP address y and the updated service requirement v. The vRSU B sets the service state of the target on board unit to an active state.

Still as shown in FIG. 9, the vRSU B sends forwarding information of the target on board unit to the vRSU A through a connection interface between base stations (such as an Xn interface, an X2 interface, or a tunnel connection). The vRSU A updates forwarding table of the vRSU A itself according to the forwarding information of the target on board unit sent from the vRSU B, and sets the service state of the target on board unit to an inactive state (i.e., standby state).

The vRSU B communicates with the target on board unit based on the forwarding information of the target on board unit in the forwarding table of the vRSU itself.

The solutions provided in the embodiments of the present disclosure are introduced above from the perspective of methods. A communication apparatus is further shown below, which is configured to perform the vehicle-to-everything communication method in any of the above-mentioned embodiments and possible implementations thereof. It can be understood that, in order to implement the above functions, the communication apparatus includes corresponding hardware structures and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain function is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above-mentioned method embodiments in the embodiments of the present disclosure. For example, each functional module may be divided corresponding to each function, or two or more functions may be integrated into one functional module. The integrated module may implemented in the form of hardware, or may be implemented in the form of software. It should be noted that, the division for the modules in the embodiments of the present disclosure is illustrated, which is only a logical functional division, and there may be other division manners in actual implementation. It should be understood that the above-mentioned module may also referred to as a unit. The following is illustrated by taking an example of a division of each functional module corresponding to each function.

FIG. 13 is a structural schematic diagram of a communication apparatus according to some embodiments. Referring to FIG. 13, the communication apparatus 200 includes a communication module 201 and a processing module 202.

The communication module 201 is configured to: receive forwarding information of a target on board unit sent from a second road side unit, where the target on board unit is an on board unit that communicates with the second road side unit, and the forwarding information of the target on board unit includes an identification of the target on board unit.

The processing module 202 is configured to: store the forwarding information of the target on board unit in a forwarding table.

In some embodiments, the forwarding information further includes: a service requirement of the target on board unit, an IP address of the target on board unit, and a service state of the target on board unit.

In some embodiments, the processing module 202 is further configured to: delete the forwarding information of the target on board unit in response to that a service state in the forwarding information is an inactive state, and information sent from the target on board unit is not received within a second preset time.

In some embodiments, the processing module 202 is further configured to: switch the service state in the forwarding information of the target on board unit from the inactive state to an active state in response to that a service state in the forwarding information is an inactive state, and information sent from the target on board unit is received within a second preset time.

In some embodiments, the communication module 201 is further configured to: perform data transmission with the target on board unit according to the forwarding information of the target on board unit after sensing that the target on board unit has moved into a service range of the first road side unit.

In some embodiments, the communication module 201 is further configured to receive service access request information sent from the target on board unit. The processing module 202 is further configured to: obtain updated forwarding information by updating the forwarding information according to the service access request information in response to that a target parameter carried in the service access request information is different from a target parameter in the forwarding information, where a target parameter includes the service requirement of the target on board unit and/or the IP address of the target on board unit; and perform data transmission with the target on board unit according to the updated forwarding information.

In some embodiments, the communication apparatus 200 and the second road side unit are configured with a same service IP address and a same service port number, a service IP address and a service port are used for performing data transmission and service access with the target on board unit.

In some embodiments, the communication device 200 and the second road side unit are configured with different service IP addresses and different service port numbers, and the communication device 200 and the second road side unit are configured with a same access IP address and a same access port number. A service IP address and a service port number are used for performing data transmission and service access with the target on board unit, and an access IP address and an access port number are used for performing service access with the target on board unit.

In some embodiments, the communication module 201 is further configured to send the service IP address and service port number of the first road side unit to the second road side unit.

Still as shown in FIG. 13, the present disclosure also provides another communication apparatus. Referring to FIG. 13, the communication apparatus 200 includes: a communication module 201 and a processing module 202.

The communication module 201 is configured to: acquire forwarding information of a target on board unit, where the target on board unit is an on board unit that communicates with the second road side unit, and the forwarding information includes an identification of the target on board unit.

The communication module 201 is further configured to send the forwarding information to a first road side unit.

In some embodiments, the forwarding information further includes: a service requirement of the target on board unit, an IP address of the target on board unit, and a service state of the target on board unit.

In some embodiments, the communication module 201 is configured to: receive service access request information of the target on board unit, where the service access request information includes the identification of the target on board unit, the service requirement of the target on board unit, and the IP address of the target on board unit.

In some embodiments, the processing module 202 is further configured to: generate the forwarding information according to the service access request information.

In some embodiments, the processing module 202 is further configured to: set a service state in the forwarding information to an inactive state in response to that a service state in the forwarding information is an active state, and information sent from the target on board unit is not received within a first preset time.

In some embodiments, the processing module 202 is further configured to: delete the forwarding information in response to that a service state in the forwarding information is an inactive state, and the information sent from the target on board unit is not received within a second preset time.

In some embodiments, the communication apparatus 200 and the second road side unit are configured with a same service IP address and a same service port number, a service IP address and a service port are used for performing data transmission and service access with the target on board unit.

In some embodiments, the communication device 200 and the second road side unit are configured with different service IP addresses and different service port numbers, and the communication device 200 and the second road side unit are configured with a same access IP address and a same access port number. A service IP address and a service port number are used for performing data transmission and service access with the target on board unit, and an access IP address and an access port number are used for performing service access with the target on board unit.

In some embodiments, the communication module 201 is further configured to send the service IP address and the service port number of the communication device 200 to the target on board unit.

In some embodiments, the communication module 201 is further configured to: acquire the service IP address and the service port number of the first road side unit; and send the service IP address and the service port number of the first road side unit to the target on board unit.

In a case where the functions of the above-mentioned integrated modules are implemented in the form of hardware, a structure of a communication apparatus is further provided in the embodiments of the present disclosure, and the communication apparatus is configured to perform the vehicle-to-everything communication method provided in the embodiments of the present disclosure. As shown in FIG. 14, the communication apparatus 300 includes a processor 302. In some examples, the communication apparatus may further include at least one of a communication interface 303, a bus 304, and a memory 301.

The processor 302 may be any of various exemplary logical blocks, modules and circuits described for implementing or executing the embodiments of the present disclosure. The processor 302 may be a central processor, a general-purpose processor, a digital signal processor, an application specific integrated circuit, a field programmable gate array, or other programmable logic component, a transistor logic component, a hardware assembly, or any combination thereof. The processor 302 may implement or execute various illustrative logical blocks, modules and circuits described in conjunction with the embodiments of the present disclosure. The processor 302 may also be a combination that implements computing functions, for example, the processor 302 includes a combination of one or more microprocessors, a combination of a DSP (digital signal processor) and a microprocessor, or the like.

The communication interface 303 is used to connect to other devices through a communication network. The communication network may be the Ethernet, a radio access network, a wireless local area network (wireless local area network, WLAN), or the like.

The memory 301 may be a read-only memory (ROM) or other types of static storage devices that are capable of storing static information and instructions, a random access memory (RAM) or other types of dynamic storage devices that are capable of storing information and instructions, or an electrically erasable programmable read-only memory (EEPROM), a magnetic disk storage medium or any other magnetic disk storage devices, or any other medium that can be used to carry or store desired program codes with instructions or data and can be accessed by a computer, which is not limited thereto.

In an implementation, the memory 301 may be integrated with the processor 302.

As another implementation, the memory 301 may exist independently from the processor 302, and the memory 301 may be connected to the processor 302 through the bus 304, and is configured to store instructions or program codes (e.g., computer program instructions, etc.) that are executable for the processor 302. When the processor 302 invokes and executes the instructions or program codes stored in the memory 301, the processor 302 may implement the vehicle-to-everything communication method provided in the embodiments of the present disclosure.

The bus 304 may be an extended industry standard architecture (EISA) bus, or the like. The bus 304 may be classified as an address bus, a data bus, a control bus, or the like. For ease of representation, only one bold line is used in FIG. 14 for representing the bus 304, but it does not mean that there is only one bus or one type of bus.

A computer-readable storage medium (e.g., a non-transitory computer-readable storage medium) is provided in some embodiments of the present disclosure, the computer-readable storage medium has stored computer program instructions, and the computer program instructions, upon being executed on a computer (e.g., the above-mentioned communication apparatus, the communication apparatus, base station, the first terminal, the second terminal and the processors thereof), enable the computer to perform the vehicle-to-everything communication method as described in any one of the above-mentioned embodiments. It should be understood that, the present disclosure imposes no limitation on the form of the computer.

In some examples, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage medium described in the present disclosure may represent one or more devices for storing information and/or other machine-readable storage medium for storing information. The term "machine-readable storage medium" may include, but not limited to, a wireless channel and various other medium capable of storing, containing, and/or carrying instructions and/or data.

A computer program product including instructions is provided in the embodiments of the present disclosure, upon the computer program product is running on a computer, the computer is enabled to perform the vehicle-to-everything communication method as described in any one of the above-mentioned embodiments.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A vehicle-to-everything communication method, **characterized in that** the method is applied to a first road side unit, and comprises:
receiving forwarding information of a target on board unit sent from a second road side unit, wherein the target on board unit is an on board unit that communicates with the second road side unit, and the forwarding information of the target on board unit comprises an identification of the target on board unit; and
storing the forwarding information of the target on board unit in a forwarding table.

2. The method according to claim 1, wherein the forwarding information further comprises: a service requirement of the target on board unit, an IP address of the target on board unit, and a service state of the target on board unit.

3. The method according to claim 2, further comprising:
in response to that a service state in the forwarding information is an inactive state, and information sent from the target on board unit is not received within a second preset time, deleting the forwarding information of the target on board unit.

4. The method according to claim 2, further comprising:
in response to that a service state in the forwarding information is an inactive state, and information sent from the target on board unit is received within a second preset time, switching the service state in the forwarding information of the target on board unit from the inactive state to an active state.

5. The method according to claim 2, further comprising:
After sensing that the target on board unit has moved into a service range of the first road side unit, performing data transmission with the target on board unit according to the forwarding information of the target on board unit.

6. The method according to claim 2, further comprising:
receiving service access request information sent from the target on board unit;
in response to that a target parameter carried in the service access request information is different from a target parameter in the forwarding information, obtaining updated forwarding information by updating the forwarding information according to the service access request information, wherein a target parameter includes: the service requirement of the target on board unit and/or the IP address of the target on board unit;
performing data transmission with the target on board unit according to the updated forwarding information.

7. The method according to claim 1, wherein the first road side unit and the second road side unit are configured with a same service IP address and a same service port number, the service IP address and the service port number are used for performing data transmission and service access with the target on board unit.

8. The method according to claim 1, wherein the first road side unit and the second road side unit are configured with different service IP addresses and different service port numbers, and the first road side unit and the second road side unit are configured with a same access IP address and a same access port number, a service IP address and a service port number are used for performing data transmission with the target on board unit, and an access IP address and an access port number are used for performing service access with the target on board unit.

9. The method according to claim 8, further comprising:
sending the service IP address and the service port number of the first road side unit to the second road side unit.

10. A vehicle-to-everything communication method, **characterized in that** the method is applied to a second road side unit, and comprises:
acquiring forwarding information of a target on board unit, wherein the target on board unit is an on board unit that communicates with the second road side unit, and the forwarding information comprises an identification of the target on board unit; and
sending the forwarding information to a first road side unit.

11. The method according to claim 10, wherein the forwarding information further comprises: a service requirement of the target on board unit, an IP address of the target on board unit, and a service state of the target on board unit.

12. The method according to claim 11, wherein acquiring the forwarding information of the target on board unit comprises:
receiving service access request information of the target on board unit, wherein the service access request information comprises the identification of the target on board unit, the service requirement of the target on board unit, and the IP address of the target on board unit; and
generating the forwarding information according to the service access request information.

13. The method according to claim 10, further comprising:
in response to that a service state in the forwarding information is an active state, and information sent from the target on board unit is not received within a first preset time, setting a service state in the forwarding information to an inactive state.

14. The method according to claim 13, further comprising:
in response to that a service state in the forwarding information is an inactive state, and the information sent from the target on board unit is not received within a second preset time, deleting the forwarding information.

15. The method according to claim 10, wherein the first road side unit and the second road side unit are configured with a same service IP address and a same service port number, the service IP address and the service port number are used for performing data transmission and service access with the target on board unit.

16. The method according to claim 10, wherein the first road side unit and the second road side unit are configured with different service IP addresses and different service port numbers, and the first road side unit and the second road side unit are configured with a same access IP address and a same access port number, a service IP address and a service port number are used for performing data transmission with the target on board unit, and an access IP address and an access port number are used for performing service access with the target on board unit.

17. The method according to claim 16, further comprising:
sending the service IP address and the service port number of the second road side unit to the target on board unit.

18. The method according to claim 16, further comprising:
acquiring the service IP address and the service port number of the first road side unit;
sending the service IP address and the service port number of the first road side unit to the target on board unit.

19. A communication apparatus, **characterized by** comprising: a processor and a memory, wherein the memory is coupled to the processor, the memory is configured to store instructions executable for the processor;
wherein the processor is configured to, upon executing the instructions, enable the communication apparatus to perform the method according to any one of claims 1 to 18.

20. A computer-readable storage medium, wherein the computer-readable storage medium stores computer program instructions, wherein the computer program instructions, upon being run on a computer, enable the computer to perform the method according to any one of claims 1 to 18.
